# EUROPÄISCHE PATENTSCHRIFT

(11) **EP 0 492 296 B1**
(45) Veröffentlichungstag und Bekanntmachung des Hinweises auf die Patenterteilung: **12.04.1995**
(21) Anmeldenummer: 91121295.9
(22) Anmeldetag: 12.12.1991
(51) Int. Cl.: B29C 45/27

(54) **Heisskanal-Umlenkeinrichtung für Spritzgiesswerkzeug**
Hot channel alteration device for injection moulds
Dispositif de déviation de canal chauffant pour moules de moulage par injection

(30) Priorität: 22.12.1990 DE 4041532
(43) Veröffentlichungstag der Anmeldung: 01.07.1992
(73) Patentinhaber: Wolff, Hans-Martin, CH-2825 Courchapoix (CH)
(72) Erfinder: Wolff, Hans-Martin, CH-2825 Courchapoix (CH)
(74) Vertreter: Katscher, Helmut, Dipl.-Ing.

(56) Entgegenhaltungen:
- DE-A- 2 948 561
- US-A- 3 667 682

## Beschreibung

Die Erfindung betrifft eine Heißkanal-Umlenkeinrichtung für Spritzgießwerkzeuge mit einem beheizbaren, mit Kupfer oder Kupferlegierung vergossenen Umlenkblock, in dem von einer Zufuhrstelle für die Kunststoffschmelze mindestens ein Umlenkkanal zu mindestens einer Anspritzdüse führt, die in eine Düsenplatte ragt, wobei der Umlenkkanal von einem in das Kupfer bzw. die Kupferlegierung eingebetteten Rohr gebildet wird.

Derartige Heißkanal-Umlenkeinrichtungen werden als Umlenkverteiler bezeichnet, wenn mehrere Anspritzdüsen angeschlossen sind. Sie dienen dazu, die an der zentralen Zufuhrstelle zugeführte Kunststoffschmelze zu den einzelnen Anspritzdüsen zu leiten. Wenn nur eine einzige Anspritzdüse vorgesehen ist, dient die dann als Umlenkblock bezeichnete Einrichtung dazu, die Kunststoffschmelze von der zentralen Zufuhrstelle zu der außermittig angeordneten, einzelnen Anspritzdüse umzulenken, ohne daß eine Verzweigung des Umlenkkanals erforderlich ist.

Auf ihrem Weg zu der Anspritzdüse bzw. den Anspritzdüsen muß die Kunststoffschmelze auf einer vorgegebenen Temperatur gehalten werden. Zu diesem Zweck werden bei herkömmlichen Heißkanalverteilern sowohl der Verteilerblock als auch die Anspritzdüsen elektrisch beheizt. Hierzu ist in den Verteilerblock bzw. Umlenkblock ein elektrisches Heizelement eingebettet. Die Anspritzdüsen sind mit dem Verteilerblock bzw. Umlenkblock über jeweils eine Angußbuchse verbunden, die ebenfalls mittels eines elektrischen Heizelements beheizt wird.

Die Verbindung zwischen der Angußbuchse und dem Umlenkblock bzw. Verteilerblock, die gegen den Austritt von Kunststoffschmelze dicht sein muß, wird bei den bekannten Heißkanal-Umlenkeinrichtungen durch eine Verschraubung erreicht. Bei einer bekannten Ausführungsform sind die Angußbuchsen in den Umlenkblock bzw. Verteilerblock eingeschraubt. Diese Verschraubung ist jedoch hohen Beanspruchungen ausgesetzt; außerdem müssen besondere konstruktive Maßnahmen zur Abdichtung ergriffen werden, weil das Einschraubgewinde selbst nicht ausreichend dichtet.

Bei einer anderen bekannten Ausführungsform werden die Angußbuchsen durch eine außenliegende Verschraubung gegen den Umlenkblock bzw. Verteilerblock gedrückt, um eine dichte Verbindung herzustellen. Auch bei dieser Ausführung bereitet der im Betrieb auftretende Temperaturwechsel Schwierigkeiten, weil die Verschraubung einerseits so stark vorgespannt sein muß, daß auch im kalten Betriebszustand bereits eine ausreichende Abdichtung erreicht wird; andererseits muß die Verschraubung eine ausreichende Wärmedehnung unter den auftretenden, verhältnismäßig hohen Betriebstemperaturen zulassen, ohne daß die dabei auftretenden Wärmedehnungen unzulässig hohe Verspannungskräfte verursachen.

Aufgabe der Erfindung ist es daher, eine Heißkanal-Umlenkeinrichtung der eingangs genannten Gattung so auszuführen, daß im gesamten Bereich jedes Umlenkkanals zwischen der zentralen Zufuhrstelle und der Anspritzdüse bzw. den Anspritzdüsen keine Dichtheitsprobleme an einer Verbindungsstelle auftreten.

Die Aufgabe wird erfindungsgemäß dadurch gelöst, daß der Umlenkblock mit mindestens einem jeweils eine Anspritzdüse tragenden Anschlußstutzen einstückig vergossen ist und daß das eingebettete Rohr ununterbrochen aus dem Umlenkblock und durch den Anschlußstutzen bis zur Anspritzdüse führt.

Vorteilhafte Weiterbildungen der Erfindung sind in den abhängigen Ansprüchen 2 bis 5 beschrieben.

Im Gegensatz zu den bekannten Konstruktionen, bei denen zwischen dem Umlenkblock und der Anspritzdüse eine Angußbuchse angeordnet ist, wird erfindungsgemäß der Umlenkblock an mindestens einer Stelle zu einem Anschlußstutzen verlängert, der an seinem freien Ende die Anspritzdüse trägt. Die durch das Vergießen erreichte einstückige, monolithische Ausführung des Umlenkblocks und des Anschlußstutzens, durch die das Rohr ununterbrochen verläuft, führt dazu, daß dazwischen keine Verbindungsstelle besteht, die mechanisch abgedichtet werden müßte und die zu einer Undichtheit führen könnte. Außerdem wird dadurch erreicht, daß der Umlenkkanal auf seiner gesamten Länge gleichmäßig temperiert ist, weil an keiner Stelle ein weniger beheizter Bereich liegt.

Wenn mehrere Anspritzdüsen angeschlossen sind, ist der Umlenkblock als Verteilerblock ausgeführt, und alle Anschlußstutzen der Anspritzdüsen sind ebenfalls einstückig mit dem Verteilerblock vergossen. Ein in der weiteren Ausgestaltung des Erfindungsgedankens wesentliches Merkmal besteht darin, daß sich die Anspritzdüsen jeweils durch eine Bohrung einer Dichtscheibe erstrecken, die in einer die Anspritzdüse umgebenden Dichtnut der Düsenplatte bzw. des Spritzgießwerkzeugs verschiebbar, jedoch dichtend eingepaßt ist.

Durch diese neuartige Maßnahme wird das Problem der Wärmedehnung einer solchen einstückigen Heißkanal-Umlenkeinrichtung ausgeschaltet. Wenn nämlich mehrere Anschlußstutzen an einen Verteilerblock in der beschriebenen Weise einstückig angeschlossen sind, besteht durch die Wärmedehnung des Verteilerblocks, die von dessen Länge abhängt und beträchtliche Werte erreichen kann, die Gefahr, daß die Anschlußstutzen abbrechen. Durch die in Dehnungsrichtung des Verteilerblocks beweglichen, in der Dichtnut der Düsenplatte bzw. des Spritzgießwerkzeugs jedoch dichtend eingepaßten Dichtscheiben wird es ermöglicht, daß die Anspritzdüsen die von der Wärmedehnung des Verteilerblocks verursachte Bewegung relativ zu dem Spritzgießwerkzeug ausführen, ohne daß es dabei zu wesentlichen Biegespannungen oder Beschädigungen kommt.

Mit der Erfindung wird eine Heißkanal-Umlenkeinrichtung geschaffen, die mit verhältnismäßig geringem Aufwand und Kosten als einstückiges Bauteil hergestellt werden kann und die im Betrieb sehr sicher ist. Der Umlenkblock bzw. Verteilerblock mit den angeschlossenen Anspritzdüsen wird ohne Verschraubung im Spritzgießwerkzeug angeordnet und stützt sich nur über Gegendrucklager ab, die die beim Spritzvorgang auftretenden Kräfte aufnehmen. Eine Verspannung der Umlenkeinrichtung im Spritzgießwerkzeug zur Herstellung eines dichten Anschlusses ist jedoch nicht erforderlich. Eine Undichtheit kann nicht auftreten.

Gemäß einer bevorzugten Ausführungsform der Erfindung ist vorgesehen, daß der Umlenkblock und der bzw. die angeschlossenen Anschlußstutzen von einem gemeinsamen metallischen Gehäuse umschlossen sind, das mit Kupfer bzw. Kupferlegierung ausgegossen ist. Durch dieses Gehäuse wird bereits bei der Herstellung eine gesonderte Gießform oder Gießkokille eingespart, weil das Gehäuse selbst die Gießform bildet.

Da das Gehäuse nach dem Gießen mit dem aus Kupfer oder Kupferlegierung gegossenen Körper verbunden bleibt, gibt es dem so gebildeten Verteilerblock eine wesentlich erhöhte mechanische Festigkeit. Daher können auch Verteilerblöcke in großen Abmessungen hergestellt werden, ohne daß deren mechanische Festigkeit ein Problem darstellt. Durch die erfindungsgemäße Verwendung eines gemeinsamen metallischen Gehäuses für den Umlenkblock bzw. Verteilerblock und den bzw. die angeschlossenen Anschlußstutzen wird es ermöglicht, Heißkanal-Umlenkeinrichtungen in allen gewünschten Größen, Gestaltungen und Abmessungen herzustellen.

Die Erfindung wird nachfolgend an Ausführungsbeispielen näher erläutert, die in der Zeichnung dargestellt sind. Es zeigt:
Fig. 1 eine Heißkanal-Umlenkeinrichtung für ein Spritzgießwerkzeug in der Ausführung mit einem zu einer einzigen Anspritzdüse führenden Umlenkblock in einem Schnitt,
Fig. 2 eine Heißkanal-Umlenkeinrichtung für Spritzgießwerkzeuge mit einem zu mehreren Anspritzdüsen führenden Verteilerblock, ebenfalls im Schnitt und
Fig. 3 in einem vergrößerten Schnitt Einzelheiten der Abdichtung im Bereich der Anspritzdüse.

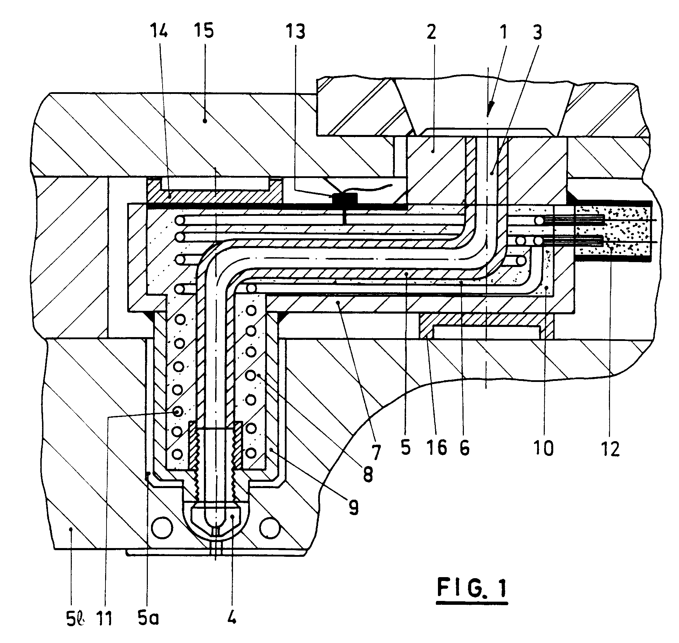

Fig. 1 zeigt in einem Teilschnitt eine Heißkanal-Umlenkeinrichtung für ein Spritzgießwerkzeug. Von einer zentralen Zufuhrstelle 1, vorzugsweise der Anschlußstelle eines Extruders, wird die Kunststoffschmelze über eine Düsenanlageplatte 2 durch einen Umlenkkanal 3 zu einer Anspritzdüse 4 geleitet, die in einer Bohrung 5a einer Düsenplatte 5b eingesetzt ist, die ein Teil des Spritzgießwerkzeugs bildet.

Der Umlenkkanal 3 besteht aus einem Rohr 5 aus korrosionsfestem Metall, vorzugsweise Edelstahl. Ein balkenförmiger Umlenkblock 6 weist ein metallisches Gehäuse 7 auf, in dem das Rohr 5 verläuft. Am Ende des Umlenkblocks 6 ist ein Anschlußstutzen 8 angeschlossen, an dessen äußerem Ende sich die Anspritzdüse 4 befindet. Der Anschlußstutzen 8 ist ebenfalls von einem metallischen Gehäuse 9 umschlossen. Das aus dem beispielsweise trogförmigen Gehäuse 7 und dem angeschweißten zylindrischen Gehäuse 9 gebildete, gemeinsame Gehäuse, beispielsweise aus korrosionsfestem Stahl ist mit Kupfer oder Kupferlegierung 10 ausgegossen. In das Kuper bzw. die Kupferlegierung 10 sind Heizrohre 11 eingegossen, deren elektrische Anschlußleitungen zu einem Versorgungsanschluß 12 geführt sind. Ein in Fig. 1 nur angedeuteter Thermofühler 13 erfaßt die Temperatur im Umlenkblock 6 und liefert ein Signal an eine (nicht dargestellte) elektrische Steuereinrichtung, die die Beheizung des Umlenkblocks 6 mit dem angeschlossen Anschlußstutzen 8 so steuert, daß die erforderliche Temperatur konstantgehalten wird.

Das aus dem Gehäuse 7 und dem oder den angeschweißten zylindrischen Gehäusen 9 gebildete, gemeinsame Gehäuse bildet beim Herstellungsvorgang eine Gießform, in die das Kupfer oder die Kupferlegierung eingegossen wird. Danach dient das gemeinsame Gehäuse 7, 9 als tragende Schale, die dem Umlenkblock 6 (bzw. dem später noch beschriebenen Verteilerblock 6') in wesentlichem Maße seine mechanische Festigkeit gibt.

Der balkenförmige Umlenkblock 6 wird über dem einstückig damit verbundenen Anschlußstutzen 8 durch eine Druckanlageplatte 14 an einer oberen Werkzeugplatte 15 abgestützt. Diese Druckanlageplatte 14 dient nur dazu, den beim Spritzgießvorgang auftretenden Druck aufzunehmen; jedoch ist keine Vorspannung erforderlich.

Unter der zentralen Zufuhrstelle 1 ist eine Gegendruckplatte 16 angeordnet, über die sich der Umlenkblock 6 an der Werkzeugplatte 5 abstützt.

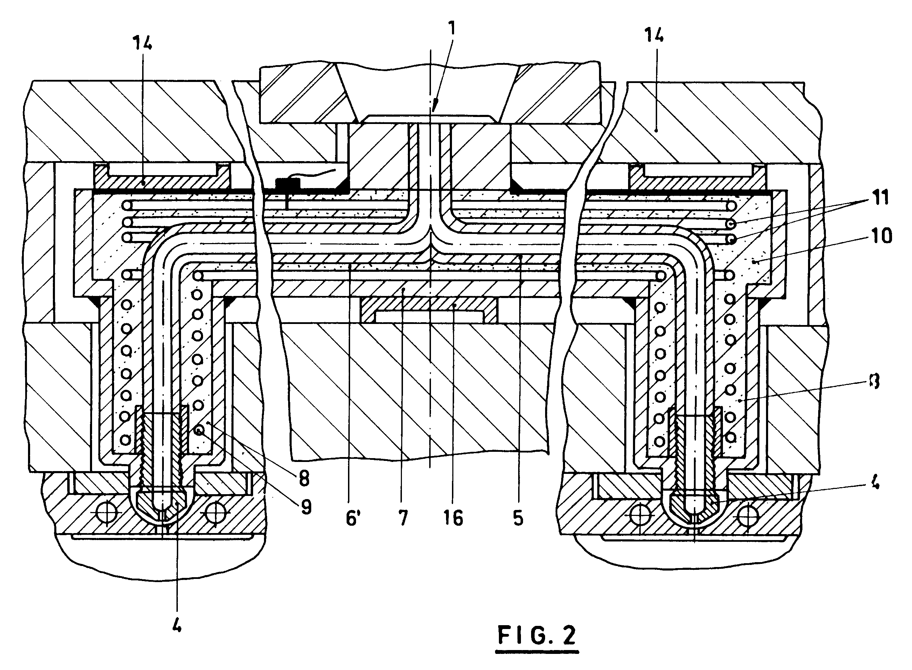

Das in Fig. 2 dargestellte Ausführungsbeispiel unterscheidet sich von dem Ausführungsbeispiel nach Fig. 1 in erster Linie dadurch, daß der Umlenkblock als Verteilerblock 6' ausgeführt ist, an den mehrere damit einstückig vergossene Anschlußstutzen 8 angeschlossen sind, die jeweils zu einer Anspritzdüse 4 führen. Auch hierbei sind der Verteilerblock 6' und die angeschlossenen Anschlußstutzen 8 von einem gemeinsamen metallischen Gehäuse 7, 9 umschlossen, das mit Kupfer ode Kupferlegierung 10 ausgegossen ist und die Verteilerrohre 5 sowie die Heizrohre 11 aufnimmt.

Ebenso wie bei dem vorher beschriebenen Ausführungsbeispiel führen die Rohre 5 ununterbrochen von der zentralen Zufuhrstelle 1 zu den einzelnen Anspritzdüsen 4. Die aus dem Verteilerblock 6' und den Anschlußstutzen 8 bestehende Heißkanal-Umlenkeinrichtung bildet ein einstückiges Bauteil, das in das Spritzgießwerkzeug ohne zusätzliche Verschraubungen eingesetzt ist und sich dort nur über die Stützplatten 14 bzw. 16 abstützt. Diese Stützplatten 14 bzw. 16 sind vorzugsweise aus einem wenig wärmeleitenden Material, beispielsweise Titan oder Keramik hergestellt, um eine Wärmeübertragung zwischen dem Spritzgießwerkzeug und dem Umlenkblock 6 bzw. Verteilerblock 6' zu vermeiden.

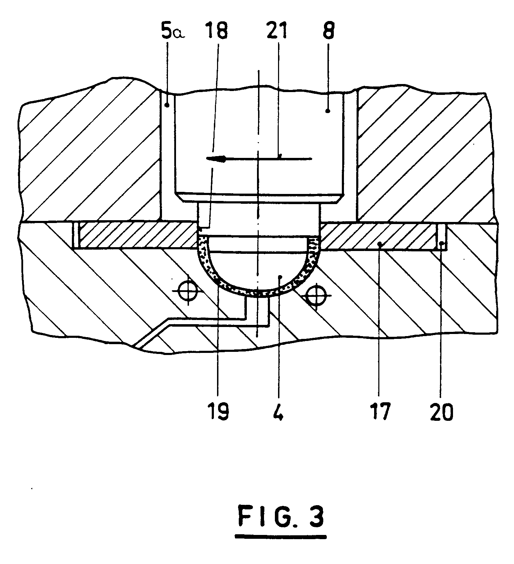

Wie man besonders in Fig. 3 in Einzelheiten erkennt, ist jede der Anspritzdüsen 4 aus Fig. 2 mit einer sich quer zur Düsenachse erstreckenden Dichtscheibe 17 versehen. Die Anspritzdüse 4 erstreckt sich durch eine zentrale Bohrung 18 der Dichtscheibe 17. Auf diese Weise wird ein die Spitze der Anspritzdüse 4 umgebender Raum 19, der eine Isolierzone bildet, zur Bohrung 5 hin abgedichtet.

Die Dichtscheibe 17 ist in einer die Anspritzdüse 4 umgebenden Dichtnut 20 verschiebbar, jedoch dichtend eingepaßt.

Auf diese Weise wird das durch die Wärmedehnung des Verteilerblocks 6' entstehende Problem beherrscht. Bei einer Länge des Verteilerblocks 6' von beispielsweise 100 mm kann die in Längsrichtung auftretende, durch die Erwärmung bedingte Dehnung etwa 0,25 mm betragen. Dies bedeutet in der Praxis, daß ein Abbrechen der Anschlußstutzen 8 zu befürchten wäre, wenn die Anspritzdüsen 4 im Spritzgießwerkzeug fest eingesetzt wären. Durch die beschriebene Anordnung der Dichtscheibe 17 oder Dehnscheibe wird eine Beweglichkeit der Anspritzdüse 4 in der durch einen Pfeil 21 in Fig. 3 angedeuteten Dehnungsrichtung ermöglicht, so daß unzulässige Spannungen vermieden werden, die dazu führen könnten, daß die Anschlußstutzen 8 abbrechen. Die Dichtscheibe 17 dichtet die Isolierzone 19 ab, zentriert den Angußstutzen 8 und erlaubt ein seitliches Ausdehnungsspiel. Die in der Isolierzone 19 befindliche, erkaltete Kunststoffmasse ist bei Betriebstemperatur noch so elastisch, daß sie die Verschiebung der Anspritzdüse 4 infolge der Wärmedehnung im Verteilerblock 6' ohne Schwierigkeiten mitmacht.

Die Passung zwischen der Dichtscheibe 17 und der sie aufnehmenden Dichtnut 20, d.h. die Passung zwischen der Dichtscheibe 17 und der Höhe der Dichtnut 20 wird vorzugsweise so gewählt, daß ein Spiel von etwa 0,02 bis 0,05 mm besteht. Die sich daraus ergebende Dichtspaltbreite ist einerseits ausreichend groß, um unter allen Betriebsbedingungen eine seitliche Verschiebung der Dichtscheibe 17 in der Dichtnut 20 zu ermöglichen; andererseits ist diese Spaltbreite gering genug, um das Eindringen von Kunststoffmasse zu verhindern.

Abweichend von dem dargestellten Ausführungsbeispiel kann auch eine getrennte elektrische Beheizung des Umlenkblocks 6 bzw. Verteilerblocks 6' und der Anschlußstutzen 8 vorgesehen werden, wobei aber gleichwohl ein vollständiger Temperaturausgleich zwischen diesen Teilen durch die gemeinsame Gußausführung gewährleistet ist.

## Patentansprüche

1. Heißkanal-Umlenkeinrichtung für Spritzgießwerkzeuge mit einem beheizbaren, mit Kupfer oder Kupferlegierung vergossenen Umlenkblock (6, 6'), in dem von einer Zufuhrstelle (1) für die Kunststoffschmelze mindestens ein Umlenkkanal (3) zu mindestens einer Anspritzdüse (4) führt, die in eine Düsenplatte ragt, wobei der Umlenkkanal (3) von einem in das Kupfer bzw. die Kupferlegierung eingebetteten Rohr (5) gebildet wird, dadurch gekennzeichnet, daß der Umlenkblock (6, 6') mit mindestens einem jeweils eine Anspritzdüse (4) tragenden Anschlußstutzten (8) einstückig vergossen ist und daß das eingebettete Rohr (5) ununterbrochen aus dem Umlenkblock (6, 6') und durch den Anschlußstutzen (8) bis zur Anspritzdüse (4) führt.

2. Heißkanal-Umlenkeinrichtung nach Anspruch 1, dadurch gekennzeichnet, daß an den als Verteilerblock (6') ausgeführten Umlenkblock mehrere damit einstückig vergossene Anschlußstutzen (8) angeschlossen sind, die jeweils zu einer Anspritzdüse (4) führen, und daß sich die Anspritzdüsen (4) jeweils durch eine Bohrung (18) einer Dichtscheibe (17) erstrecken, die in einer die Anspritzdüse (4) umgebenden Dichtnut (20) der Düsenplatte (5b) bzw. des Spritzgießwerkzeugs verschiebbar, jedoch dichtend eingepaßt ist.

3. Heißkanal-Umlenkeinrichtung nach Anspruch 1 oder 2, dadurch gekennzeichnet, daß der Umlenkblock (6) bzw. Verteilerblock (6') und der bzw. die angeschlossenen Anschlußstutzen (8) von einem gemeinsamen metallischen Gehäuse (7, 9) umschlossen sind, das mit Kupfer bzw. Kupferlegierung (10) ausgegossen ist.

4. Heißkanal-Umlenkeinrichtung nach einem der Ansprüche 1 bis 3, dadurch gekennzeichnet, daß in dem Kupfer bzw. der Kupferlegierung (10) Heizrohre (11) eingegossen sind.

5. Heißkanal-Umlenkeinrichtung nach Anspruch 4, dadurch gekennzeichnet, daß alle Heizrohre (11) des Umlenkblocks (6 bzw. 6') und des bzw. der Anschlußstutzen (8) zu einem gemeinsamen Versorgungsanschluß (12) geführt sind.

## Claims

1. Hot channel alteration device for injection moulds, having a heated alteration block (6, 6') cast with copper or copper alloy, in which at least one alteration channel (3) leads from a supply point (1) for the molten plastics to at least one injection nozzle (4) which projects into an injector plate, the alteration channel (3) being formed by a pipe (5) embedded into the copper or the copper alloy, characterized in that the alteration block (6, 6') is cast in one piece with at least one connecting pipe (8), in each case carrying one injection nozzle (4), and that the embedded pipe (5) leads without interruption from the alteration block (6, 6') and through the connecting pipe (8) to the injection nozzle (4).

2. Hot channel alteration device according to Claim 1, characterized in that, at the alteration block made as a distributor block (6'), several cast connecting pipes (8) are connected which each lead to an injection nozzle (4), and that the injection nozzles (4) each extend through a hole (18) in a sealing disc (17), which is fitted in a sealing groove (20) of an injector plate (6) or of the injection mould enclosing the injection nozzle (4) so that it can be slid, but in a sealed manner.

3. Hot channel alteration device according to Claims 1 or 2, characterized in that the alteration block (6) or distributor block (6') and the connected connecting pipe or pipes (8) are enclosed by a common metallic casing (7, 9) which is poured out with copper or copper alloy (10).

4. Hot channel alteration device according to one of Claims 1 to 3, characterized in that heating pipes (11) are cast into the copper or copper alloy (10).

5. Hot channel alteration device according to Claim 4, characterized in that all heating pipes (11) of the alteration block (6 or 6') and of the connecting pipe or pipes (8) are led to a common supply connection (12).

## Revendications

1. Dispositif de déviation de canal chauffant pour moules d'injection comprenant un bloc de déviation (6, 6') scellé par du cuivre ou un alliage de cuivre et qui peut être chauffé, dans lequel au moins un canal de déviation (3) mène à au moins une buse d'injection (4) à partir d'un poste d'alimentation (1) pour la masse fondue de matière plastique, ladite buse passant à travers une plaque porte-buses, le canal de déviation (3) étant formé d'un tube (5) noyé dans le cuivre ou l'alliage de cuivre, caractérisé en ce que le bloc de déviation (6, 6') est scellé d'une pièce avec au moins un raccord (8) portant respectivement une buse d'injection (4) et en ce que le tube noyé (5) mène de manière ininterrompue du bloc de déviation (6, 6') à la buse d'injection (4) via le raccord (8).

2. Dispositif de déviation de canal chauffant selon la revendication 1, caractérisé en ce que plusieurs raccords (8) scellés de la sorte d'une pièce sont raccordés au bloc de déviation qui se présente sous la forme d'un bloc de distribution (6'), les raccords menant respectivement à une buse d'injection (4), et en ce que les buses d'injection (4) s'étendent respectivement à travers un alésage (18) d'un disque d'étanchéité (17), qui est logé dans une rainure étanche (20), entourant la buse d'injection (4), de la plaque porte-buses (6) ou du moule d'injection de manière mobile, mais étanche.

3. Dispositif de déviation de canal chauffant selon la revendication 1 ou 2, caractérisé en ce que le bloc de déviation (6) ou le bloc de distribution (6') et le ou les raccords (8) qui lui sont raccordés sont entourés par un boîtier métallique commun (7, 9) qui est coulé dans du cuivre ou un alliage de cuivre (10).

4. Dispositif de déviation de canal chauffant selon l'une quelconque des revendications 1 à 3, caractérisé en ce que des tubes chauffants (11) sont noyés dans le cuivre ou l'alliage de cuivre (10).

5. Dispositif de déviation de canal chaufffant selon la revendication 4, caractérisé en ce que tous les tubes de chauffage (11) du bloc de déviation (6 ou 6') et du ou des raccords (8) sont acheminés à une connexion d'alimentation commune (12).
